# EUROPEAN PATENT APPLICATION

(11) **EP 4 443 549 A1**
(43) Date of publication of application: **09.10.2024**
(21) Application number: 24166244.4
(22) Date of filing: 26.03.2024
(51) Int. Cl.: H01M 4/24, H01M 4/66, H01M 10/30, H01M 50/417, H01M 50/42, H01M 50/449, H01M 50/491, H01M 4/42, H01M 50/46

(54) **ZINC SECONDARY BATTERY**

(30) Priority: 29.03.2023 JP 2023053248
(71) Applicant: FDK Corporation, Tokyo 108-8212 (JP)
(72) Inventor: MURASE, Satoshi, Tokyo, 108-8212 (JP); SUZUKI, Soma, Tokyo, 108-8212 (JP); YAMAGUCHI, Tomomichi, Tokyo, 108-8212 (JP); BANNO, Taketoshi, Tokyo, 108-8212 (JP); ITO, Takeshi, Tokyo, 108-8212 (JP)
(74) Representative: Epping - Hermann - Fischer

(57) **Abstract**

A battery (2) includes an outer can (10) and an electrode group (22) housed in the outer can (10) together with an alkaline electrolyte solution. The electrode group (22) includes a positive electrode (24) and a negative electrode (26) stacked together with a separator (28) therebetween. The negative electrode (26) includes a negative electrode core (27) and a negative electrode mixture (29) retained on the negative electrode core (27). The negative electrode mixture (29) contains at least one of zinc, a zinc alloy, and a zinc-containing compound. The negative electrode core (27) is composed of a nonporous copper foil. The separator (28) is a composite including a nonwoven fabric (42) and a microporous film (40) stacked together in the thickness direction. The value of A/B is 0.28 or more and 0.53 or less, where A is the total thickness of the microporous film (40), and B is the total thickness of the nonwoven fabric (42).

## Description

### BACKGROUND OF THE INVENTION

### Field of the Invention

The present invention relates to zinc secondary batteries.

### Description of the Related Art

Zinc batteries, which use zinc, a zinc alloy, or a zinc-containing compound as a negative electrode active material, have been researched and developed for use as primary batteries and secondary batteries. Zinc batteries are categorized according to the material used as the positive electrode active material. Examples of such zinc batteries include air-zinc batteries, which use oxygen in air as a positive electrode active material, nickel-zinc batteries, which use a nickel-containing compound as a positive electrode active material, manganese-zinc batteries, which use a manganese-containing compound as a positive electrode active material, and silver-zinc batteries, which use a silver-containing compound as a positive electrode active material. In particular, air-zinc primary batteries, manganese-zinc primary batteries, and silver-zinc primary batteries have been put to practical use and have been widely used.

On the other hand, zinc secondary batteries, such as nickel-zinc secondary batteries, have superior potential for outperforming existing lithium-ion secondary batteries since zinc secondary batteries have high safety because an aqueous solution can be used as an electrolyte and also have very high theoretical volumetric energy density.

However, zinc secondary batteries suffer from the formation of so-called dendrites, which are tree-like zinc precipitates formed on the negative electrode during charging and discharging. These dendrites may grow and penetrate the separator to reach the positive electrode after a relatively small number of charge-discharge cycles, thereby causing a short circuit. Thus, zinc secondary batteries have a problem in that the cycle life shortens due to a short circuit caused by dendrites.

To solve this problem, various studies have been conducted, including those on the incorporation of a microporous film into a separator, as in a zinc battery disclosed in Japanese Unexamined Patent Application Publication No. 2019-133844. This allows the likelihood of a short circuit to be reduced.

Recently, batteries have been used in various devices such as various portable devices and hybrid electric vehicles, expanding the range of applications of batteries. The expanding range of applications has increased the importance of development and improvements in batteries in many industries, and batteries with higher performance have been mainly desired. Under these circumstances, zinc secondary batteries with higher performance have also been desired. Here, one of the capabilities required of a zinc secondary battery that are to be enhanced is the capability of being repeatedly charged and discharged over a longer period of time, that is, cycle life characteristics.

Besides a short circuit due to the growth of dendrites as described above, factors that shorten the cycle life of a zinc secondary battery include the so-called separator dry-out phenomenon, in which the positive electrode swells and presses the separator due to deterioration and causes the electrolyte solution to be squeezed from the separator, with the result that the separator cannot retain a sufficient amount of electrolyte solution. As disclosed in Japanese Unexamined Patent Application Publication No. 2019-133844, the incorporation of a microporous film into a separator improves its resistance to dendrite penetration (hereinafter also referred to as "dendrite resistance"). However, the incorporation of the microporous film decreases the capacity of the separator to retain the electrolyte solution, which prevents the battery from being sufficiently charged and discharged due to the separator dry-out phenomenon and thus decreases the cycle life.

Studies have been conducted on the dendrite resistance of existing zinc secondary batteries, as discussed in Japanese Unexamined Patent Application Publication No. 2019-133844. However, a zinc secondary battery with sufficient cycle life characteristics to meet user demands has yet to be provided. To further improve the cycle life, therefore, it is believed to be important to find factors that contribute to improvements in cycle life characteristics and to achieve a balance between these factors by conducting a wider range of studies without focusing on dendrite resistance. From this viewpoint, it is believed that the cycle life can be further extended by conducting studies to inhibit the separator dry-out phenomenon while maintaining the dendrite resistance and also to inhibit dendrite growth.

### SUMMARY OF THE INVENTION

The present invention has been made in view of the foregoing circumstances, and an object of the present invention is to provide a zinc secondary battery with superior cycle life characteristics to those in the related art.

According to the present invention, there is provided a zinc secondary battery including a container and an electrode group housed in the container together with an alkaline electrolyte solution. The electrode group includes a positive electrode and a negative electrode stacked together with a separator therebetween. The negative electrode includes a negative electrode core and a negative electrode mixture retained on the negative electrode core. The negative electrode mixture contains at least one of zinc, a zinc alloy, and a zinc-containing compound. The negative electrode core is composed of a nonporous sheet-shaped metal conductor. The separator is a composite including a nonwoven fabric and a microporous film stacked together in the thickness direction. The value of A/B is 0.28 or more and 0.53 or less, where A is the total thickness of the microporous film, and B is the total thickness of the nonwoven fabric.

The zinc secondary battery according to the present invention has a configuration including a container and an electrode group housed in the container together with an alkaline electrolyte solution. The electrode group includes a positive electrode and a negative electrode stacked together with a separator therebetween. The negative electrode includes a negative electrode core and a negative electrode mixture retained on the negative electrode core. The negative electrode mixture contains at least one of zinc, a zinc alloy, and a zinc-containing compound. The negative electrode core is composed of a nonporous sheet-shaped metal conductor. The separator is a composite including a nonwoven fabric and a microporous film stacked together in the thickness direction. The value of A/B is 0.28 or more and 0.53 or less, where A is the total thickness of the microporous film, and B is the total thickness of the nonwoven fabric. This configuration allows the zinc secondary battery according to the present invention to have a reduced likelihood of a short circuit due to zinc dendrites while having sufficient electrolyte solution retention stability between the positive and negative electrodes, thereby maintaining high capacity retention rate over a long period of time. Thus, the present invention can provide a zinc secondary battery with superior cycle life characteristics to those in the related art.

### BRIEF DESCRIPTION OF THE DRAWINGS

FIG. 1 is a partially cutaway perspective view of a nickel-zinc battery according to one embodiment;
FIG. 2 is a sectional view schematically illustrating the arrangement of a positive electrode and a negative electrode with a separator having a two-layer structure therebetween; and
FIG. 3 is a sectional view schematically illustrating the arrangement of a positive electrode and a negative electrode with a separator having a four-layer structure therebetween.

### DETAILED DESCRIPTION OF THE PREFERRED EMBODIMENTS

A nickel-zinc secondary battery (hereinafter also referred to as "battery") 2 according to one embodiment will hereinafter be described with reference to the drawings.

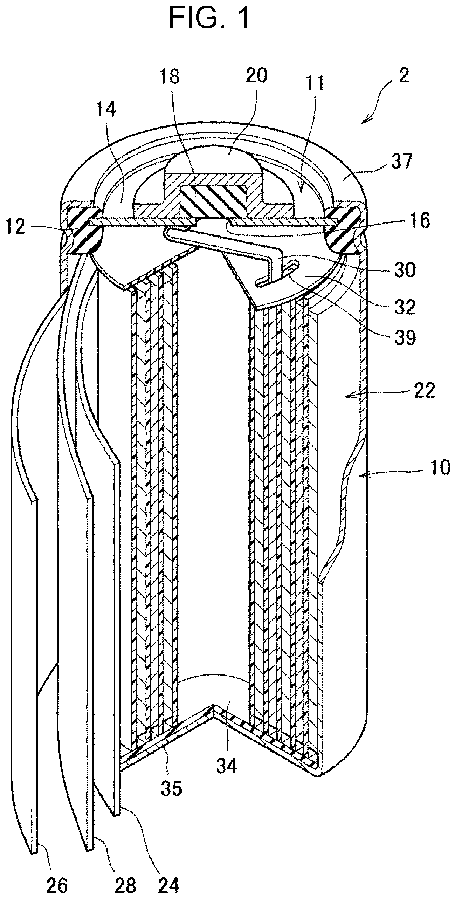

The battery 2 is, for example, a cylindrical battery of 4/3 FA size. Specifically, as illustrated in FIG. 1, the battery 2 includes, as a container, an outer can 10 having a closed-bottom cylindrical shape with an opening at the top end thereof. The outer can 10 is conductive and includes a bottom wall 35 that functions as a negative electrode terminal. A sealing member 11 is secured to the opening of the outer can 10. The sealing member 11 includes a lid plate 14 and a positive electrode terminal 20 and seals the outer can 10 while providing the positive electrode terminal 20. The lid plate 14 is a circular conductive member. The lid plate 14 and an annular insulating gasket 12 surrounding the lid plate 14 are disposed within the opening of the outer can 10, and the insulating gasket 12 is secured to an opening edge 37 of the outer can 10 by crimping the opening edge 37 of the outer can 10. That is, the lid plate 14 and the insulating gasket 12 cooperate with each other to close the opening of the outer can 10 in an airtight manner.

Here, the lid plate 14 has a central through-hole 16 in the center thereof, and a rubber valve disc 18 closing the central through-hole 16 is disposed on the outer surface of the lid plate 14. Furthermore, the metal positive electrode terminal 20 is electrically connected to the outer surface of the lid plate 14 so as to cover the valve disc 18. Here, the positive electrode terminal 20 has a cylindrical shape with one end thereof closed and the other end thereof open and has a flange formed around the opening at the other end thereof. The positive electrode terminal 20 presses the valve disc 18 against the lid plate 14. The positive electrode terminal 20 has a vent hole (not illustrated).

The central through-hole 16 is normally closed in an airtight manner by the valve disc 18. On the other hand, when gas is generated in the outer can 10 and increases the internal pressure thereof, the valve disc 18 is compressed by the internal pressure, thus opening the central through-hole 16. As a result, the gas is released outside from the outer can 10 through the central through-hole 16 and the vent hole (not illustrated) of the positive electrode terminal 20. That is, the central through-hole 16, the valve disc 18, and the positive electrode terminal 20 form a safety valve for the battery 2.

The electrode group 22 is housed in the outer can 10. The electrode group 22 includes a positive electrode 24, a negative electrode 26, and a separator 28, each being strip-shaped. Specifically, the positive electrode 24 and the negative electrode 26 are spirally wound together with the separator 28 therebetween. That is, the positive electrode 24 and the negative electrode 26 are stacked together with the separator 28 therebetween. The outermost periphery of the electrode group 22 is formed by a portion (outermost peripheral portion) of the negative electrode 26 and is in contact with the inner peripheral wall of the outer can 10. That is, the negative electrode 26 and the outer can 10 are electrically connected to each other.

A positive electrode lead 30 is disposed in the outer can 10 between one end of the electrode group 22 and the lid plate 14. Specifically, the positive electrode lead 30 has one end thereof connected to the positive electrode 24 and the other end thereof connected to the lid plate 14. Thus, the positive electrode terminal 20 and the positive electrode 24 are electrically connected to each other through the positive electrode lead 30 and the lid plate 14. A circular upper insulating member 32 is disposed between the lid plate 14 and the electrode group 22, and the positive electrode lead 30 extends through a slit 39 formed in the upper insulating member 32. A circular lower insulating member 34 is also disposed between the electrode group 22 and the bottom portion of the outer can 10.

Furthermore, a predetermined amount of alkaline electrolyte solution (not illustrated) has been poured into the outer can 10. The electrode group 22 is impregnated with the alkaline electrolyte solution, which is mainly retained on the separator 28. The alkaline electrolyte solution allows an electrochemical reaction (charge-discharge reaction) to proceed between the positive electrode 24 and the negative electrode 26 during charging and discharging. As the alkaline electrolyte solution, an aqueous solution containing at least one of KOH, NaOH, and LiOH as a solute is preferably used. In addition, the concentration of the alkaline electrolyte solution is not particularly limited; for example, a 7 N alkaline electrolyte solution is used. Furthermore, since the battery 2 is a nickel-zinc battery, the above alkaline electrolyte solution is preferably used with zinc oxide dissolved therein to the saturation concentration. This allows dissolution of zinc from the negative electrode 26 into the alkaline electrolyte solution to be reduced to a lower level.

The positive electrode 24 includes a conductive positive electrode core having a porous structure and a positive electrode mixture retained on the positive electrode core. An example of a positive electrode core as described above is a metal member made of nickel and having a three-dimensional network skeleton. The skeleton of the metal member extends over the entire positive electrode core, and gaps in the skeleton form communication pores. The communication pores are filled with the positive electrode mixture. As the metal member, for example, foamed nickel can be used.

The positive electrode mixture contains a positive electrode active material, a positive electrode additive, and a thickener. The thickener may be, for example, hydroxypropyl cellulose. In addition, a binder is preferably added as needed. The binder may be, for example, a hydrophilic or hydrophobic polymer.

As the positive electrode active material, nickel hydroxide is used. Nickel hydroxide is used in powder form. That is, a nickel hydroxide powder, which is a collection of nickel hydroxide particles, is used. As the nickel hydroxide particles, higher order nickel hydroxide particles are preferably used.

As the above nickel hydroxide particles, those having Co, Zn, Cd, or the like dissolved therein are preferably used.

In addition, the above nickel hydroxide particles preferably have the surfaces thereof covered with a surface layer containing a cobalt compound. As the surface layer, a higher order cobalt compound layer containing a higher order cobalt compound with a valence of 3 or more is preferably used.

The above higher order cobalt compound layer has superior conductivity and forms a conductive network. As the higher order cobalt compound layer, a layer containing a higher order cobalt compound with a valence of 3 or more, such as cobalt oxyhydroxide (CoOOH), is preferably used.

As another method for forming a conductive network, it is preferred to use a method in which a cobalt compound powder is added to the positive electrode mixture instead of forming a surface layer containing a cobalt compound on the surfaces of the nickel hydroxide particles. The cobalt compound powder may be a cobalt hydroxide powder. The method in which a cobalt compound powder is added is advantageous in that a conductive network can be more easily formed than by the method in which a surface layer containing a cobalt compound is formed on the surfaces of the nickel hydroxide particles.

Next, the positive electrode additive may be yttrium oxide. As the positive electrode additive, it is also preferred to use cobalt compounds such as cobalt oxide and cobalt hydroxide, zinc compounds such as zinc oxide and zinc hydroxide, niobium oxide, erbium oxide, metallic cobalt, and metallic zinc.

Next, the positive electrode 24 can be manufactured, for example, as follows.

First, a positive electrode mixture slurry is prepared by adding the positive electrode additive, the thickener, and water to the positive electrode active material powder obtained as described above, which is a collection of positive electrode active material particles, and mixing them together. Foamed nickel, for example, is then filled with the resulting positive electrode mixture slurry, followed by drying treatment. After the drying treatment, the foamed nickel filled with the materials such as the nickel hydroxide particles is rolled and then cut. Thus, the positive electrode 24 including the positive electrode mixture is obtained.

Next, the negative electrode 26 will be described.

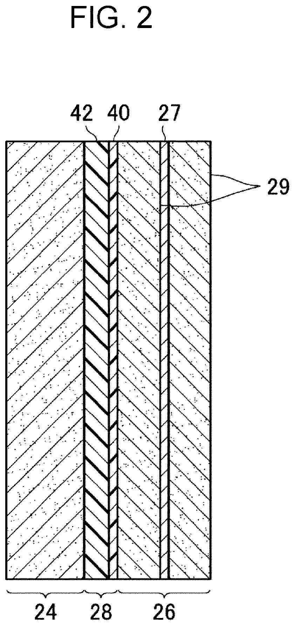

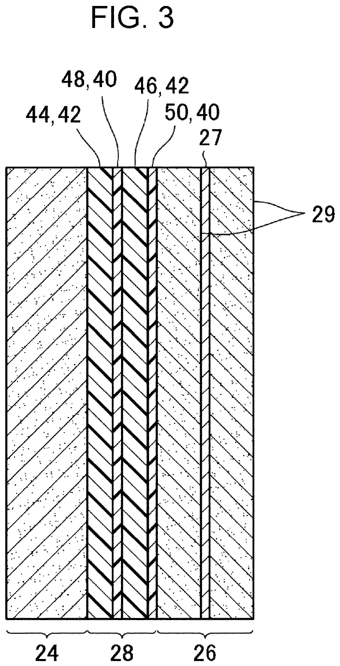

As illustrated in FIGs. 2 and 3, the negative electrode 26 includes a strip-shaped conductive negative electrode core 27 and a negative electrode mixture 29 retained on the negative electrode core 27.

The negative electrode core 27 is a nonporous sheet-shaped metal conductor and is a so-called nonporous foil. Here, "nonporous" refers to a form in which there are no pores extending through the sheet from the front surface to the back surface thereof. Specifically, a copper foil having a thickness of from 20 µm to 50 µm is preferably used as the negative electrode core 27.

Since the above negative electrode core 27 has no pores, the negative electrode core 27 has no corners or edges around pores and is generally flat. A generally uniform current flows through the generally flat surface during charging and discharging.

Here, a zinc secondary battery is repeatedly charged and discharged through transfer of zinc ions between a positive electrode and a negative electrode. When the electrodes have a geometrically nonuniform portion, a current concentrates on that nonuniform portion. As a result, zinc precipitates in the form of dendrites on the portion where the current concentrates. That is, dendrites tend to form when the shape of the negative electrode is nonuniform.

In this embodiment, since the negative electrode core 27 is generally flat as described above, there is little geometrically nonuniform portion, and accordingly, there is little portion where a current concentrates. Thus, the use of a nonporous sheet-shaped metal conductor as the negative electrode core 27 can contribute to inhibiting the formation of zinc dendrites.

The negative electrode mixture 29 is retained in layer form on both surfaces of the negative electrode core 27. The layers of the negative electrode mixture 29 have a flat and uniform shape along the flat negative electrode core 27. Thus, the negative electrode 26 also has a flat and uniform shape as a whole, so that the formation of zinc dendrites can be reduced to a lower level.

The above negative electrode mixture 29 contains a negative electrode active material and a binder, and a negative electrode additive and a thickener are added as needed.

The negative electrode active material contains at least zinc and may further contain at least one of a zinc alloy and a zinc-containing compound. Here, bismuth, aluminum, indium, or the like is preferably used in addition to zinc as a raw material for the zinc alloy. Examples of zinc-containing compounds include zinc oxide (Japanese Industrial Standards (JIS) Grade 1, Grade 2, and Grade 3), zinc hydroxide, zinc sulfide, tetrahydroxidozincate ion salts, zinc halides, zinc carboxylate compounds such as zinc acetate, zinc tartrate, and zinc oxalate, magnesium zincate, calcium zincate, barium zincate, zinc borate, zinc silicate, zinc aluminate, zinc fluoride, zinc carbonate, zinc hydrogen carbonate, zinc nitrate, and zinc sulfate.

The negative electrode active material is used in powder form. That is, a negative electrode active material powder, which is a collection of negative electrode active material particles, is used. Zinc particles serving as the negative electrode active material preferably have an average particle size of from 49 µm to 71 µm.

Here, zinc alloy particles preferably have an average particle size of 10 to 1000 µm, and zinc-containing compound particles preferably have an average particle size of 0.1 to 100 µm. As used herein, the term "average particle size" refers to the average particle size at a cumulative percentage of 50% on a mass basis as determined by a laser diffraction/scattering method using a particle size distribution analyzer, unless otherwise specified.

The binder functions to bind the materials such as the negative electrode active material and the negative electrode additive to each other and also to bind the materials such as the negative electrode active material and the negative electrode additive to the negative electrode core 27. Here, a synthetic rubber is used as the binder. In particular, styrene-butadiene rubber (SBR) is preferably used as the binder because of its high binding effect.

The negative electrode additive functions to improve the characteristics of the negative electrode 26. Examples of negative electrode additives include bismuth oxide, bismuth hydroxide, indium oxide, indium hydroxide, potassium oxalate, and hydrates thereof.

In addition, the thickener is not particularly limited. For example, hydroxypropyl cellulose is used.

Next, the negative electrode 26 can be manufactured, for example, as follows.

First, a negative electrode mixture paste is prepared by mixing together the negative electrode active material powder, which is a collection of negative electrode active material (e.g., zinc) particles, the negative electrode additive, the binder, the thickener, and water. The resulting negative electrode mixture paste is applied to the negative electrode core 27, followed by drying treatment. After drying, the negative electrode core 27 having the materials such as the negative electrode active material powder and the binder retained thereon is rolled in its entirety to increase the packing density of the negative electrode active material. Thus, an intermediate product of the negative electrode is obtained. The intermediate product of the negative electrode is then cut to a predetermined shape. Thus, the negative electrode 26 is manufactured.

The separator 28 is provided to avoid a short circuit between the positive electrode 24 and the negative electrode 26. Therefore, an electrically insulating material is used as the separator 28. The separator 28 is a composite including a microporous film 40 and a nonwoven fabric 42 stacked together in the thickness direction. Preferably, as illustrated in FIG. 2, the separator 28 is a composite having a two-layer structure in which one microporous film 40 and one nonwoven fabric 42 are stacked together. When the composite of the two-layer structure is incorporated into the electrode group 22, the nonwoven fabric 42 is located on the positive electrode 24 side, and the microporous film 40 is located on the negative electrode 26 side. More preferably, as illustrated in FIG. 3, two nonwoven fabrics 42 (first nonwoven fabric 44 and second nonwoven fabric 46) and two microporous films 40 (first microporous film 48 and second microporous film 50) are provided, and when incorporated into the electrode group 22, the nonwoven fabrics 42 and the microporous films 40 form a composite having a four-layer structure in which, in order from the positive electrode 24 to the negative electrode 26, the first nonwoven fabric 44, the first microporous film 48, the second nonwoven fabric 46, and the second microporous film 50 are stacked together.

The microporous film 40 is a polymer film containing numerous pores and is made of a polyolefin. If the microporous film 40 has too high porosity, it is difficult to block the growth of dendrites. On the other hand, if the microporous film 40 has too low porosity, the microporous film 40 hinders the permeation of the alkaline electrolyte solution and thus hinders the passage of ions. The microporous film 40 preferably has a porosity of from 34% to 49%. Here, the porosity of the microporous film 40 is the proportion, expressed as a percentage, of the volume of the pore space relative to the total volume of the microporous film 40.

Here, known microporous film separators include polyolefin microporous film separators for lithium-ion batteries, and such microporous film separators for lithium-ion batteries can be used in this embodiment. However, such microporous films are preferably subjected to hydrophilic treatment since an alkaline aqueous solution is used as an electrolyte solution for zinc secondary batteries. Examples of hydrophilic treatment include plasma treatment in which polar functional groups are added to the surface by surface modification with oxygen radicals, sulfonation treatment in which sulfonate groups are formed on the surface by treatment with sulfur trioxide gas or fuming sulfuric acid, and treatment with a surfactant. In this embodiment, hydrophilic treatment with a surfactant is preferably selected as the hydrophilic treatment to reduce damage to the microporous film 40 to a lover level.

In addition, polyethylene microporous films with a melting point of 130°C to 140°C are mainly used for lithium-ion batteries to improve their safety. This is intended for a shutdown function, that is, a function in which the polyethylene forming the microporous film melts when the battery temperature increases abnormally due to, for example, a short circuit, thereby closing the pores and interrupting the passage of ions through the separator. Zinc secondary batteries, however, have a low risk of burning because an alkaline aqueous solution is used; therefore, polypropylene microporous films, which have a higher melting point, can be used. Of course, polyethylene microporous films can also be used in this embodiment.

In addition, it is common to use a microporous film alone as a separator for lithium-ion batteries. However, microporous films have a low capacity to retain water (hereinafter also referred to as "liquid retention capacity"). Since the capacity of the separator 28 to retain the alkaline aqueous solution is important for zinc secondary batteries, it is effective to use, as the separator 28, a composite in which the microporous film 40, which has low liquid retention capacity, and the nonwoven fabric 42, which is used as a separator for nickel-hydrogen secondary batteries, are combined together. That is, the nonwoven fabric 42, being characterized by high porosity and superior liquid retention capacity as compared to the microporous film 40, is suitable for complementing the liquid retention capacity of the microporous film 40.

As the nonwoven fabric 42, for example, a polyamide fiber nonwoven fabric having hydrophilic functional groups added thereto, a polyolefin fiber nonwoven fabric, such as a polyethylene or polypropylene fiber nonwoven fabric, having hydrophilic functional groups added thereto, or the like can be used. Specifically, a nonwoven fabric based on polyolefin fibers having sulfonate groups added thereto by sulfonation treatment is preferably used. Here, sulfonate groups are added by treating the nonwoven fabric with an acid containing a sulfate group, such as sulfuric acid or fuming sulfuric acid.

Here, in this embodiment, the value of the ratio of A to B, that is, A/B, is 0.28 or more and 0.53 or less, where A is the total thickness of the microporous film 40, and B is the total thickness of the nonwoven fabric 42.

When the value of A/B is less than 0.28, the proportion of the nonwoven fabric 42 is high and results in superior liquid retention capacity. Therefore, the separator dry-out phenomenon is less likely to occur. However, the proportion of the microporous film 40 is low and results in low dendrite resistance. Therefore, a short circuit due to dendrites tends to occur, and a decrease in cycle life due to dendrites occurs.

When the value of A/B is more than 0.53, the proportion of the microporous film 40 is high and results in superior dendrite resistance. Therefore, the likelihood of dendrites penetrating the separator and causing a short circuit is reduced. However, the proportion of the nonwoven fabric 42 is low and results in low liquid retention capacity as a whole. Therefore, the amount of alkaline electrolyte solution retained is small, and separator dry-out tends to occur. Thus, a decrease in cycle life due to separator dry-out occurs.

Accordingly, as described above, it is important that the value of A/B be from 0.28 to 0.53 to increase the dendrite resistance while inhibiting the separator dry-out phenomenon.

The positive electrode 24 and negative electrode 26 manufactured as described above are spirally wound together with the above separator 28 therebetween. Thus, the electrode group 22 is formed.

The thus-obtained electrode group 22 is housed in the outer can 10. A predetermined amount of alkaline electrolyte solution is then poured into the outer can 10.

Thereafter, the outer can 10 having the electrode group 22 and the alkaline electrolyte solution housed therein is sealed with the sealing member 11 including the positive electrode terminal 20 to obtain the battery 2. The resulting battery 2 is brought into a usable state by initial activation treatment.

### Examples

### 1. Manufacture of Battery

### Example 1

### (1) Manufacture of Positive Electrode

A positive electrode mixture slurry was prepared by adding 25 parts by weight of a cobalt hydroxide powder, 0.5 parts by weight of an yttrium oxide powder, 0.5 parts by weight of a zinc oxide powder, 0.3 parts by weight of a niobium oxide powder, and 50.0 parts by weight of water containing 0.2% by weight of a hydroxypropyl cellulose powder serving as a thickener to 100 parts by weight of a nickel hydroxide powder provided as a positive electrode active material and mixing them together.

Sheet-shaped foamed nickel serving as a positive electrode core was then filled with the positive electrode mixture slurry. The foamed nickel used herein had an area density (basis weight) of about 350 g/m², a porosity of 95%, and a thickness of 1.3 mm.

The foamed nickel filled with the positive electrode mixture slurry was then subjected to drying treatment. Thereafter, the entire foamed nickel filled with the positive electrode mixture was rolled and then cut to a predetermined size to obtain a positive electrode 24 for 4/3 FA size. The positive electrode 24 had a positive electrode capacity of 2,400 mAh.

### (2) Manufacture of Negative Electrode

The following materials were provided: 100 parts by weight of a zinc oxide powder, 25 parts by weight of a zinc powder, 3 parts by weight of a bismuth oxide powder, 2 parts by weight of potassium oxalate monohydrate, 4 parts by weight of a styrene-butadiene rubber powder serving as a binder, 1 part by weight of a hydroxypropyl cellulose powder serving as a thickener, and 100 parts by weight of water. A negative electrode mixture paste was prepared by mixing together the zinc oxide powder, the zinc powder, the bismuth oxide powder, potassium oxalate monohydrate, the styrene-butadiene rubber powder, the hydroxypropyl cellulose powder, and water in an environment at 25°C.

Here, the zinc oxide particles forming the zinc oxide powder had an average particle size of 0.75 µm, and the zinc particles forming the zinc powder had an average particle size of 71 µm.

On the other hand, a tin-plated nonporous copper foil was provided as a negative electrode core. The nonporous copper foil had a thickness of 35 µm and had a sheet shape with no pores extending therethrough from the front surface to the back surface thereof.

The negative electrode mixture paste obtained as described above was uniformly applied at constant thickness to both surfaces of the nonporous copper foil serving as the negative electrode core.

After the drying of the negative electrode mixture paste, the nonporous copper foil having the negative electrode mixture retained thereon was rolled and then cut to a predetermined size to obtain a negative electrode 26 for 4/3 FA size. The negative electrode 26 had a negative electrode capacity of 4,500 mAh.

### (3) Assembly of Nickel-Zinc Battery

The positive electrode 24 and negative electrode 26 obtained as described above were spirally wound together with a separator 28 therebetween to manufacture an electrode group 22.

The separator 28 used herein for the manufacture of the electrode group 22 was a composite including polypropylene fiber nonwoven fabrics 42 subjected to sulfonation treatment and polypropylene microporous films 40 subjected to hydrophilic treatment with a surfactant that were stacked together in the thickness direction. Specifically, as illustrated in FIG. 3, a total of two nonwoven fabrics 42, namely, a first nonwoven fabric 44 and a second nonwoven fabric 46, and a total of two microporous films 40, namely, a first microporous film 48 and a second microporous film 50, were provided and used to fabricate a separator 28 composed of a composite having a four-layer structure in which, in order, the first nonwoven fabric 44, the first microporous film 48, the second nonwoven fabric 46, and the second microporous film 50 were combined together. A = 35 µm, B = 124 µm, and the value of A/B was 0.28, where A is the total thickness of the first microporous film 48 and the second microporous film 50, and B is the total thickness of the first nonwoven fabric 44 and the second nonwoven fabric 46. The first microporous film 48 and the second microporous film 50 had pores with a pore size of 0.2 µm therein and had a porosity of 41%. The first nonwoven fabric 44 and the second nonwoven fabric 46 had a basis weight of 100 g/m².

When combined and wound together, as illustrated in FIG. 3, the positive electrode 24, the negative electrode 26, and the separator 28 were arranged such that the first nonwoven fabric 44 of the separator 28 was in contact with the positive electrode 24 and the second microporous film 50 was in contact with the negative electrode 26.

On the other hand, an aqueous solution containing an alkali metal hydroxide as a solute and having zinc oxide dissolved therein to saturation was provided as an alkaline electrolyte solution. The alkaline electrolyte solution contained 30% by weight of potassium hydroxide as the alkali metal hydroxide.

The above electrode group 22 was then housed in a steel outer can 10 having a closed-bottom cylindrical shape and plated with tin in its entirety, and 3.41 mL of the provided alkaline electrolyte solution was poured into the outer can 10. Thereafter, the opening of the outer can 10 was closed with a sealing member 11. Thus, a battery 2 of 4/3 FA size with a nominal capacity of 2,000 mAh was assembled.

### (4) Initial Activation Treatment

The resulting battery 2 was subjected to one charge-discharge cycle involving a charge-discharge procedure of performing constant-current charging at a charge current of 0.2 A to a charge capacity of 2,400 mAh, followed by suspension for 15 minutes, and then performing constant-current discharging at a discharge current of 0.4 A to a battery voltage of 1.3 V in an environment at a temperature of 25°C. Thus, initial activation treatment was performed to bring the battery 2 into a usable state.

### Example 2

A nickel-zinc secondary battery was manufactured as in Example 1 except that the total thickness A of the first microporous film 48 and the second microporous film 50 was 41 µm, the total thickness B of the first nonwoven fabric 44 and the second nonwoven fabric 46 was 124 µm, and the value of A/B was 0.33.

### Example 3

A nickel-zinc secondary battery was manufactured as in Example 1 except that the total thickness A of the first microporous film 48 and the second microporous film 50 was 66 µm, the total thickness B of the first nonwoven fabric 44 and the second nonwoven fabric 46 was 124 µm, and the value of A/B was 0.53.

### Comparative Example 1

A nickel-zinc secondary battery was manufactured as in Example 1 except that the total thickness A of the first microporous film 48 and the second microporous film 50 was 70 µm, the total thickness B of the first nonwoven fabric 44 and the second nonwoven fabric 46 was 90 µm, and the value of A/B was 0.78.

### Comparative Example 2

A nickel-zinc secondary battery was manufactured as in Example 1 except that the total thickness A of the first microporous film 48 and the second microporous film 50 was 95 µm, the total thickness B of the first nonwoven fabric 44 and the second nonwoven fabric 46 was 90 µm, and the value of A/B was 1.06.

### Comparative Example 3

A nickel-zinc secondary battery was manufactured as in Example 1 except that a tin-plated copper perforated metal (having a thickness of 60 µm and having through-holes with a hole diameter of 1.0 mm) was used as the negative electrode core 27 instead of the tin-plated nonporous copper foil, the total thickness A of the first microporous film 48 and the second microporous film 50 was 36 µm, the total thickness B of the first nonwoven fabric 44 and the second nonwoven fabric 46 was 124 µm, and the value of A/B was 0.29.

### Comparative Example 4

A nickel-zinc secondary battery was manufactured as in Example 1 except that the total thickness A of the first microporous film 48 and the second microporous film 50 was 34 µm, the total thickness B of the first nonwoven fabric 44 and the second nonwoven fabric 46 was 124 µm, and the value of A/B was 0.27.

### 2. Evaluation of Nickel-Zinc Secondary Battery

### (1) Cycle Life Test

Each of the batteries of Examples 1 to 3 and Comparative Examples 1 to 4 subjected to the initial activation treatment was subjected to constant-current constant-voltage charging at a current value of 3.6 A and a maintained voltage value of 1.90 V to a charge capacity of 960 mAh in an environment at 35°C, followed by suspension for 15 minutes. The battery was then subjected to constant-current discharging at a current value of 3.6 A to a battery voltage of 1.3 V in the same environment, followed by suspension for 15 minutes.

Each battery was repeatedly charged and discharged in this way for 300 cycles, each involving the above charge-discharge cycle, and the discharge capacity at each cycle was determined. Here, the initial capacity was defined as the discharge capacity for charging and discharging at the first cycle, and the capacity retention rate at each cycle was calculated using equation (I) below: Capacity retention rate (%) = (discharge capacity at each cycle/initial capacity) x 100

The number of cycles to a capacity retention rate of 90% was counted for each battery. The counted number of cycles was used as the cycle life. Table 1 shows the results for cycle life.

**Table 1**

| | Total thickness A of microporous films (µm) | Total thickness B of nonwoven fabrics (µm) | A/B | Type of negative electrode core | Cycle life (cycles) |
|---|---|---|---|---|---|
| Example 1 | 35 | 124 | 0.28 | Nonporous foil | 300 or more |
| Example 2 | 41 | 124 | 0.33 | Nonporous foil | 300 or more |
| Example 3 | 66 | 124 | 0.53 | Nonporous foil | 300 or more |
| Comparative Example 1 | 70 | 90 | 0.78 | Nonporous foil | 150 |
| Comparative Example 2 | 95 | 90 | 1.06 | Nonporous foil | 64 |
| Comparative Example 3 | 36 | 124 | 0.29 | Perforated metal | 250 |
| Comparative Example 4 | 34 | 124 | 0.27 | Nonporous foil | 200 |

### (2) Discussion

The results in Table 1 show that the capacity retention rates of Examples 1 to 3 remained at or above 90% after 300 cycles, whereas the capacity retention rates of Comparative Examples 1 to 4 reached 90% after less than 300 cycles. Thus, this embodiment was found to provide a nickel-zinc secondary battery with improved cycle life characteristics. The reason for the improved cycle life characteristics can be presumed as follows.

A possible reason for the end of the cycle life of a nickel-zinc secondary battery is, for example, that the battery cannot be sufficiently charged and discharged because of a short circuit due to precipitation of zinc dendrites or the separator dry-out phenomenon resulting from swelling of the nickel positive electrode due to deterioration. It is believed that it was possible in the Examples above to ensure sufficient resistance to a short circuit due to dendrites while inhibiting separator dry-out because of the use of a separator in which microporous films and nonwoven fabrics were combined together such that the value of A/B was 0.28 to 0.53, where A is the total thickness of the microporous films, and B is the total thickness of the nonwoven fabrics. In addition, it is believed that it was also possible to inhibit the growth of zinc dendrites because the use of a nonporous foil as the negative electrode core allowed the zinc negative electrode to have more uniform reactivity than perforated metals in the related art. Thus, it is presumed that the synergy between these effects resulted in the improved cycle life characteristics.

Even when the entire separator has a relatively small thickness as in Example 1 above, the cycle life of the zinc secondary battery can be extended when the ratio of the total thickness of the microporous film to the total thickness of the nonwoven fabric forming the separator, that is, A/B, falls within a particular range. Thus, the present invention is believed to be particularly effective in improving the cycle life characteristics of a cylindrical zinc secondary battery including a wound electrode group with a certain design limitation on the thickness of the separator layer.

The present invention is not limited to the embodiment and examples described above; rather, various modifications can be made. For example, the present invention is not limited to nickel-zinc secondary batteries, but is also applicable to other zinc secondary batteries including a positive electrode containing no nickel, such as air-zinc secondary batteries, as long as those batteries include a negative electrode mixture containing zinc. In addition, the present invention is not limited to cylindrical secondary batteries including a wound electrode group, but also provides a similar improvement effect on cycle life characteristics when used for prismatic zinc secondary batteries including a flat electrode group formed by stacking together flat positive and negative electrodes with a separator therebetween.

## Claims

1. A zinc secondary battery comprising:
a container (10); and
an electrode group (22) housed in the container (10) together with an alkaline electrolyte solution,
the zinc secondary battery **characterized in that** the electrode group (22) includes a positive electrode (24) and a negative electrode (26) stacked together with a separator (28) therebetween,
the negative electrode (26) includes a negative electrode core (27) and a negative electrode mixture (29) retained on the negative electrode core (27),
the negative electrode mixture (29) contains at least one of zinc, a zinc alloy, and a zinc-containing compound,
the negative electrode core (27) comprises a nonporous sheet-shaped metal conductor,
the separator (28) is a composite including a nonwoven fabric (42) and a microporous film (40) stacked together in a thickness direction, and
a value of A/B is 0.28 or more and 0.53 or less, where A is a total thickness of the microporous film (40), and B is a total thickness of the nonwoven fabric (42).

2. The zinc secondary battery according to one of the previous claims, **characterized in that** the separator (28) is a composite in which the nonwoven fabric (42) comprises a plurality of nonwoven fabrics (42) and the microporous film (40) comprises a plurality of microporous films (40).

3. The zinc secondary battery according to one of the previous claims, **characterized in that** the nonwoven fabrics (42) and microporous films (40) of the composite form a four-layer structure in which, in order from the positive electrode (24) to the negative electrode (26), a first nonwoven fabric (44), a first microporous film (48), a second nonwoven fabric (46), and a second microporous film (50) are combined together.

4. The zinc secondary battery according to one of the previous claims, **characterized in that** the total thickness A of the microporous film (40) is 35um or more and 66um or less.

5. The zinc secondary battery according to one of the previous claims, **characterized in that** the metal conductor is a nonporous copper foil.
